# EUROPÄISCHE PATENTSCHRIFT

(11) **EP 2 889 441 B1**
(45) Veröffentlichungstag und Bekanntmachung des Hinweises auf die Patenterteilung: **02.03.2022**
(21) Anmeldenummer: 14004444.7
(22) Anmeldetag: 30.12.2014
(51) Int. Cl.: E04G 23/02, F16L 55/11, A47B 96/06, F16B 19/00

(54) **VERFAHREN ZUM VERSCHLIEßEN VON GERÜSTANKERLÖCHERN**
METHOD FOR CLOSING SCAFFOLDING ANCHOR HOLES
PROCÉDÉ DE FERMETURE DE TROUS D'ANCRAGE D'ÉCHAFAUDAGE

(30) Priorität: 30.12.2013 DE 102013022153
(43) Veröffentlichungstag der Anmeldung: 01.07.2015
(73) Patentinhaber: Zinsmeister, Dieter, 86551 Oberschneitbach (DE)
(72) Erfinder: Zinsmeister, Dieter, 86551 Oberschneitbach (DE)
(74) Vertreter: Grünecker Patent- und Rechtsanwälte PartG mbB

(56) Entgegenhaltungen:
- EP-A1- 0 698 704
- EP-A2- 2 551 423
- DE-U1-202011 051 282

## Beschreibung

Die vorliegende Erfindung bezieht sich auf ein Verfahren zum Verschließen von Gerüstankerlöchern gemäß Oberbegriff von Anspruch 1 sowie auf einen Gerüstankerlochdübel gemäß Oberbegriff von Anspruch 5.

Aus der EP 0698704 A1 sind Verschlussstopfen zum Verschließen von Löcheröffnungen in Bauwerken bekannt. Die Verschlussstopfen weisen ein vorkomprimiertes Stopfenelement aus PUR-Schaum auf, das nach dem Entfernen einer Kunststofffolie expandiert und sich an den Hohlraum, in den dieser Stopfen geschoben wurde, anpasst. Das Stopfenelement weist einen zentralen Kern in Form eines zylindrischen Stifts mit einem tellerartigen Flansch auf. Der Flansch kann die Stirnseite des komprimierten Stopfenelements abdecken oder sogar darüber hinaus gehen.

Aus der EP 2551423 A2 ist ein Mauerstopfen bekannt, der eine Spannschraube, eine Tragstruktur und eine Hülse aufweist, wobei die Hülse zur Abdichtung mittels der Spannschraube mit einer dosierten Spannkraft aufgeweitet werden kann.

Beim Häuserbau und nachträglichen Renovieren stellt sich insbesondere bei der Verwendung eines außen am Gebäude angeordneten Gerüsts das Problem, dass Gerüstankerlöcher in der Hausfassade verbleiben, die nicht nur für das geschulte Auge einen optischen Mangel der Hausfassade darstellen. Zur Verbesserung dieser Situation sind eine Reihe unterschiedlicher Maßnahmen entwickelt worden, die einen nachträglichen Verschluss dieser Gerüstankerlöcher ermöglichen. Hierbei ist oftmals zu berücksichtigen, dass moderne Häuser mit einer Wärmeisolierung versehen sind, durch die der Gerüstanker zum Festhalten des Gerüstes hindurchgreifen muss.

Aus der DE 202011051282 U1 ist z.B. ein Verschluss für eine solche Gerüstankeröffnung in einer thermogedämmten Fassade beschrieben. Der Verschluss besteht aus zwei Styroporzylindern. Der erste Styroporzylinder weist einen geringfügig größeren Durchmesser auf als der Lochdurchmesser und wird in diesen eingesetzt. Der zweite Styroporzylinder wird eingeklebt und weist an seiner Vorderseite eine Putzscheibe auf. Diese besteht aus einer Matte mit Haftmasse sowie einer aufgetragenen Körnung. Anschließend kann der Stopfen mit Farbe überstrichen werden, so dass von dem Gerüstankerloch nur noch wenig zu sehen ist. Für das Einsetzen des ersten Zylinders ist ein in geeigneter Weise ausgestaltetes Werkzeug erforderlich, so dass der erste Styroporzylinder mit einer entsprechenden Tiefe in das Loch eingesetzt wird und der zweite Zylinder mit seiner Putzscheibe dann bündig abschließen kann. Diese Ausgestaltung führt bereits zu einem guten Ergebnis. Allerdings ist die Handhabbarkeit aufgrund der Zweiteiligkeit des Verschlussstopfens, das zwingende Auftragen eines Klebers und das klobige Werkzeug von Nachteil.

Aus der DE 20005809 U1 ist ein Dübellochverschlussbolzen bekannt, der vollständig aus Kunststoff besteht. Dieser weist einen kuppelförmigen Abdeckflansch mit umlaufendem Dichtungsrand auf. Von diesem Abdeckflansch erstreckt sich ein Schaft mit zwei Schaftbereichen unterschiedlichen Durchmessers weg. Der größere Schaftbereich ist in der Isolationsschicht angeordnet, während sich der im Durchmesser kleinere Schaftbereich in die Verankerungsöffnung erstreckt. Am ersten Schaftbereich sind elastische Dichtungslippen angeordnet, die mit der Isolierschicht in Berührung kommen. Im zweiten Schaftbereich sind Haltelamellen angeordnet, welche eine Kraftschlussverbindung mit der Innenseite der Verankerungsbohrung herbeiführen und den Dübellochverschlussbolzen in seiner Position halten. Insbesondere für rauen Putz kann unter dem Abdeckflansch noch ein Dichtring angeordnet werden. Zwar ermöglicht diese Art des Dübellochverschlussbolzens eine einfache und schnelle Verschließung des Gerüstankerloches, jedoch sind sowohl die optische Qualität des Verschlusses als auch die Isolationswirkung noch verbesserungswürdig.

Es ist daher die Aufgabe der vorliegenden Erfindung, ein Verfahren zum Verschließen von Gerüstankerlöchern bereitzustellen, das zu einem optisch ansprechenden Ergebnis führt und einfach durchzuführen ist.

Diese Aufgabe wird durch ein Verfahren nach Anspruch 1 gelöst.

Aufgrund der Vorabkomprimierung des Expansionsabschnittes, kann der Gerüstankerlochdübel mit nur geringem axialen Kraftaufwand in das Gerüstankerloch eingeführt werden. Die im Gerüstankerloch stattfindende Expansion des Expansionsabschnittes führt dann im Anschluss zu einer ausreichenden Abdichtung. Gleichzeitig sorgt jedoch der Dübelkopf dafür, dass im Zusammenspiel mit dem Senkloch ein passgenauer Anschlag vorgesehen ist. Die Herstellung bzw. Fräsung eines solchen Senkloches in einen Außenputz kann mit einfachsten Mitteln und mit vorbestimmter Tiefe sehr einfach erfolgen. Hierdurch könnte eine Sichtfläche des Dübelkopfes im Wesentlichen bündig mit der Putzoberfläche platziert werden. Der Dübelkopf kommt somit nicht auf der Außenseite des Putzes zum Liegen, sondern ist in diesem versenkt. Das für die Herstellung des Senkloches erforderliche Werkzeug muss kaum größer sein, als ein Schraubendreher und kann in einfacher Weise von dem den Verschluss durchführenden Facharbeiter unter Umständen in einer Hosentasche mitgeführt werden. Der Dübelkopf ist als scheibenförmiger Flachkopf ausgebildet und ist auf seiner Sichtseite als im Wesentlichen flache Scheibe ausgestaltet. Unter dem Begriff "im Wesentlichen flache Scheibe" oder "im Wesentlichen flache Sichtseite" sollen Formen verstanden werden, die im Rahmen der üblichen im Bau vorhandenen Toleranzen sich im Wesentlichen bündig in den Außenputz integrieren lassen. Hiervon ausgeschlossen ist auf keinen Fall die profilierte Sichtfläche des Dübelkopfes, die die Strukturierung des Außenputzes nachahmt. Die Toleranzen bzw. Maßunterschiede zwischen Höhe des Dübelkopfes und Tiefe des Senklochs und/oder Durchmesser des Dübelkopfes und Senklochs sollten sich bevorzugt im für den Einsatzzweck vernünftigen und gut handhabbaren Rahmen bewegen und im Hinblick auf das zu erzielende Ergebnis auch Kompromisse umfassen. Bevorzugt weist das Senkloch eine Tiefe auf, die im Wesentlichen der Höhe des Dübelkopfes entspricht, und eine Querschnittsabmessung auf, die im Wesentlichen der Querschnittsabmessung des Dübelkopfes entspricht

Eventuell verbleibende Spalte zwischen dem Senkloch und dem darin aufgenommenen Dübelkopf können durch Verwendung von Farbe im Wesentlichen beseitigt werden. Hierzu wird die Sichtseite des Dübelkopfes des Gerüstankerlochdübels nach dem Einsetzen in das Gerüstankerloch mit Farbe überstrichen. Selbstverständlich kommt hierbei bevorzugt die für das Gebäude verwendete Außenwandfarbe, die an dieser Stelle verwendet wurde, zum Einsatz. Im besten Fall wird hierdurch das frühere Gerüstankerloch nahezu unsichtbar. Dies hängt selbstverständlich noch von der Oberflächenstruktur der Sichtfläche des Dübelkopfes ab und der verwendeten Toleranzen und Maßunterschiede.

Gemäß einer Ausführungsform dient der Gerüstankerlochdübel hauptsächlich zum Verschließen eines Gerüstankerlochs, das durch eine mit einer Putzschicht versehenen Wärmedämmschicht hindurch bis in das anschließende Mauerwerk verläuft. Hierbei ist die Länge des Gerüstankerlochdübels kleiner als die Dicke der Wärmedämmschicht einschließlich der Putzschicht, wobei der Expansionsabschnitt hauptsächlich in der Wärmedämmschicht angeordnet wird. Im Gegensatz zu der Befestigung eines Dübellochverschlussbolzens gemäß der DE 20005809 U1 soll die hauptsächliche Befestigung des Gerüstankerlochdübels in der Wärmedämmschicht erfolgen. Aufgrund fehlenden Kontakts mit dem Mauerwerk entsteht keine Wärmebrücke.

Bevorzugt kann zwischen der Unterseite des Dübelkopfes und dem Expansionsabschnitt ein Abstand vorhanden sein, wobei vor dem Einsetzen des Gerüstankerlochdübels eine Klebemasse aufgebracht wird, die nach dem Einsetzen des Gerüstankerlochdübels in dem Hohlraum zwischen dem Kopf, dem Gerüstankerloch und dem Expansionsabschnitt angeordnet ist. Eventuell vorhandene Spalte, insbesondere im Übergangsbereich zwischen Putz, Gerüstankerlochdübel und gegebenenfalls vorhandener Wärmedämmschicht, werden durch die Klebemasse bereits verschlossen. Die Klebemasse kann auch zum Einbetten des Dübelkopfes in dem Senkloch verwendet werden. Hierdurch werden bereits vorhandene Spalte zwischen diesen Elementen verschlossen. Je nach Art der Klebemasse ergibt sich hierdurch bereits eine gute Sperre gegen Eindringen von Feuchtigkeit.

Des Weiteren bezieht sich die Erfindung auf einen Gerüstankerlochdübel gemäß Anspruch 5, mit einem Dübelkopf einem im Wesentlichen zylindrischen, stiftförmigen Schaft und einem am Schaft angeordneten Expansionsabschnitt mit einem expandierten Durchmesser, wobei der Dübelkopf als scheibenförmiger Flachkopf ausgebildet ist, und wobei, der Expansionsabschnitt von einem komprimierbaren und elastisch rückstellbaren, hülsenförmigen Schaumstoffmaterial mit einer zylindrischen Außenkontur gebildet ist, und wobei der Expansionsabschnitt von einem komprimierbaren und elastisch rückstellbaren Schaumstoffmaterial gebildet ist und ein Durchmesser des Dübelkopfes größer ist als der Durchmesser des expandierten Expansionsabschnitts und wobei die Sichtseite des Dübelkopfes eine rauputzartige Oberflächenprofilierung aufweist. Derartige Expansionsabschnitte können z.B. von Hand komprimiert und dann in das Gerüstankerloch eingesteckt werden. Je nach Art der elastischen Rückstellbarkeit des Schaumstoffmaterials kann hierbei eine verzögerte Rückstellung die Einsetzbarkeit erleichtern, so dass das Schaumstoffmaterial im Verhältnis zur erforderlichen Einsetzzeit erst langsam wieder expandiert und sich an die Wandung des Gerüstankerlochs anlegt. Der Dübelkopf sorgt für einen eingebauten Anschlag, so dass bei Bereitstellen einer ausreichenden Sperrwirkung durch den Expansionsabschnitt auch die optischen Eigenschaften an der Sichtseite optimiert sind. Bei Verwendung von Stopfen, wie sie z.B. in der DE 202011051282 U1 eingesetzt werden, sind aufwändige nachträgliche Maßnahmen erforderlich, um im Anschluss an das Einbringen des ersten Segments (Stopfen) eine geeignete Optik zu erzielen. Mittels des erfindungsgemäßen Gerüstankerlochdübels erfolgt dies in einem Schritt durch den Einsetzvorgang des Gerüstankerlochdübels.

Der Dübelkopf ist als scheibenförmiger Flachkopf ausgebildet. Bei Verwendung einer flachen Unterseite liegt dann der Dübelkopf bündig in einem entsprechend ausgestalteten Senkloch an. Die Sichtseite ist im Wesentlichen flach, d.h. sie weist keine vorspringende Wölbung etc. auf. Die Sichtseite des Dübelkopfes weist eine rauputzartige Oberflächenprofilierung auf. Je übereinstimmender diese Oberflächenprofilierung mit dem tatsächlich verwendeten Außenputz ist, umso besser wird nachher das optische Ergebnis. Hierbei ist selbstverständlich immer zu berücksichtigen, dass nachträglich noch ein Anstrich erfolgen kann, so dass an diese Oberflächenprofilierung in Abhängigkeit des Anwendungsfalls nur bedingt hohe Anforderungen zu stellen sind.

Bei den in diesem Bereich vorliegenden Anforderungen an die Wärmeleitfähigkeit, an die Wasserdampfdiffusion, Temperaturbeständigkeit, Schalldämmung, an den Fugendurchlasskoeffizient, an die Luftdichtheit, Witterungsbeständigkeit und Schlagregendichtigkeit sowie Langzeitbeständigkeit, kann bevorzugt als Schaumstoffmaterial ein Polyurethan-Weichschaumstoff eingesetzt werden.

Günstigerweise kann das Schaumstoffmaterial vorkomprimiert und in der vorkomprimierten Stellung mittels einer Fixierhilfe fixiert sein. Hierdurch ist ein vorheriges Zusammendrücken von Hand oder auf andere Weise nicht erforderlich. Der Benutzer aktiviert quasi den elastischen Rückstellvorgang des Expansionsabschnittes durch Entfernen der Fixierhilfe. Bei der geeignet eingestellten Expansionszeit verbleibt dann dem Benutzer ausreichend zeitlicher Spielraum zum Einsetzen des Gerüstankerlochdübels.

Gemäß einer Ausführungsform kann die Fixierhilfe eine das Schaumstoffmaterial umgebende Abreiß- bzw. Aufreißumhüllung sein. Angewendet werden könnten z.B. Hülsen oder abreiß- bzw. aufreißbare Folien.

Gemäß einer Ausführungsform kann das Schaumstoffmaterial eine verzögerte elastische Rückstellfähigkeit aufweisen, die mittels einer Imprägnierung erzielt ist. Zwar existieren auch Kunststoffe, die eine verzögerte Rückstellfähigkeit aufgrund ihrer Materialeigenschaften aufweisen, wird jedoch hierzu alleine oder in Kombination eine Imprägnierung verwendet, kann eine solche Imprägnierung auch noch zusätzliche Eigenschaften für den Gerüstankerlochdübel bereitstellen. Das Schaumstoffmaterial ist bevorzugt offenporig ausgestaltet, so dass die Imprägnierung von diesem aufgenommen werden kann.

Bevorzugt kann das Imprägniermittel ein flammhemmend eingestelltes Kunstharz sein. Hierdurch lässt sich z.B. die Baustoffklasse B1 (schwer entflammbar) nach DIN 4102 erzielen.

Eine ausreichende Abdichtung und eine Verankerung durch den Expansionsabschnitt kann gemäß einer Variante dadurch erreicht werden, dass der Expansionsabschnitt einen expandierten Durchmesser von mindestens 1,1 bis 1,7 x dem Durchmesser des zugeordneten Gerüstankerlochs aufweist. Günstig ist ein mittlerer Wert von ca. 1,4. Üblicherweise weisen Gerüstankerlöcher einen Durchmesser von 14 mm auf.

Des Weiteren kann der Expansionsabschnitt im Abstand, bevorzugt von > 3 mm, zur Unterseite des Dübelkopfes, angeordnet sein. Hierdurch wird vermieden, dass zwischen dem Dübelkopf und dem Expansionsabschnitt eine direkte Wärmebrücke entsteht. Der Expansionsabschnitt soll auch möglichst nicht mit dem Außenputz in Kontakt kommen, sondern bevorzugt ausschließlich mit der Wärmeisolierung in Kontakt treten. Darüber hinaus kann der Abstand zwischen dem Dübelkopf und dem Expansionsabschnitt dazu benutzt werden, zusätzlich noch eine Klebemasse beim Einsetzen des Gerüstankerlochdübels einzubringen.

Zum Erzeugen eines koaxial zu einem Gerüstankerloch angeordneten Senkloches zur Aufnahme eines Dübelkopfes eines Gerüstankerlochdübels kann ein Fräswerkzeug verwendet werden, wobei das Werkzeug einen Handgriff, einen in das Gerüstankerloch einführbaren Schaft und eine koaxial zum Schaft angeordnete Frässcheibe mit axial vorstehender Fräszahnung aufweist. Die Frässcheibe dient dann gleichzeitig als Anschlag, weil das Senkloch nur eine Tiefe aufweisen kann, die der Höhe der Fräszähne entspricht, weil die Frässcheibe ein weiteres Eindringen in den Außenputz verhindert. Ein derartiges Fräswerkzeug kann ähnlich einem Schraubendreher ausgestaltet sein und ist von dem Benutzer sehr einfach mitzuführen.

Im Folgenden werden Ausführungsformen der vorliegenden Erfindung anhand von Zeichnungen näher erläutert. Es zeigen:
- Fig. 1: eine schematische Querschnittsdarstellung eines mittels eines Gerüstankerlochdübels verschlossenen Gerüstankerlochs,
- Fig. 2: eine erste Ausführungsform eines Gerüstankerlochdübels in einer Seitenansicht,
- Fig. 3: den Gerüstankerlochdübel aus Fig. 2 in einer Seitenansicht von rechts,
- Fig. 4: den Gerüstankerlochdübel aus Fig. 2 in einer Seitenansicht von links,
- Fig. 5: eine zweite Variante eines Gerüstankerlochdübels im Vollschnitt,
- Fig. 6: eine Ausführungsform eines Fräswerkzeugs in einer Explosionsdarstellung,
- Fig. 7: die Frässcheibe des Fräswerkzeugs aus Fig. 6 in einer vergrößerten Draufsicht,
- Fig. 8: die Frässcheibe aus Fig. 7 in einer vergrößerten Seitenansicht.

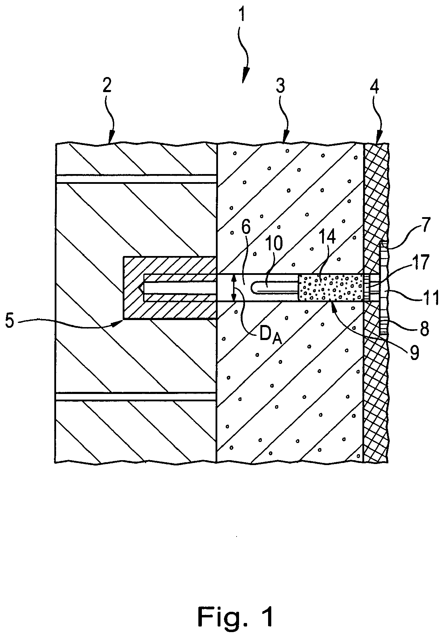

In Fig. 1 ist ein Ausschnitt einer Gehäusewand 1 im Vollschnitt dargestellt. Diese besteht im Wesentlichen aus einem Mauerwerk 2, einer davor angeordneten Wärmeisolierung 3 und einem außen auf der Wärmeisolierung 3 angebrachten Außenputz 4. Der Außenputz 4 kann mit einer nicht weiter dargestellten Armierung versehen sein. Im Mauerwerk ist ein lediglich schematisch angedeuteter Gerüstankersockel 5 angeordnet, in den ein nicht dargestellter Gerüstanker einschraubbar ist. Bei dem Sockel kann es sich auch lediglich um einen Dübel handeln, in den der Gerüstanker eindrehbar ist. Zur Anordnung des Gerüstankers erstreckt sich sowohl durch den Außenputz 4 als auch die Wärmeisolierung 3 ein Gerüstankerloch 6. Das Gerüstankerloch 6 weist einen etwas größeren Innendurchmesser D_{A} auf, als der Außendurchmesser des zugeordneten Gerüstankers. In aller Regel beträgt der Durchmesser D_{A} 14 mm.

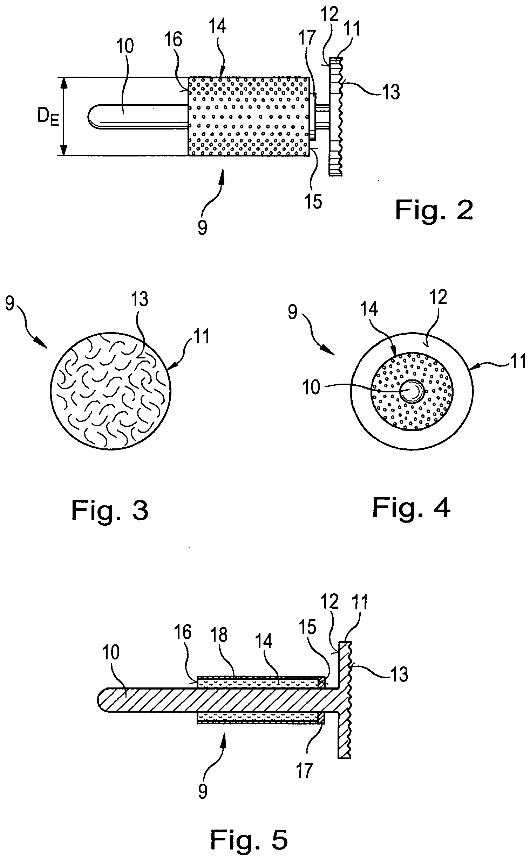

In die Sichtseite des Außenputzes 4 ist koaxial zum Gerüstankerloch 6 ein Senkloch 7 angeordnet, so dass sich eine Auflagestufe 8 im Übergang zum Gerüstankerloch 6 ergibt. In das Gerüstankerloch 6 und das Senkloch 7 ist ein im Folgenden anhand der Fig. 2 bis 4 noch näher zu beschreibender Gerüstankerlochdübel 9 eingesetzt und verschließt dieses sowohl abdichtend als auch formschön.

Der Gerüstankerlochdübel 9 weist einen im Wesentlichen zylindrischen, stiftförmigen Schaft 10 auf, an dessen einen Ende ein flacher Dübelkopf 11 angebracht ist. Der Schaft 10 weist einen Durchmesser von ungefähr 5 mm auf und der Dübelkopf 11 einen Durchmesser von ungefähr 30 mm. Die Gesamtlänge des Gerüstankerdübels 9 beträgt ca. 63 mm.

Der Dübelkopf 11 ist ca. 3 mm hoch. Seine Unterseite 12 ist eben ausgebildet, so dass sie bündig auf der Auflagestufe 8 des Senkloches 7 zur Anlage kommt. Die Sichtseite 13 des Dübelkopfes 11 weist eine rauputzartige Oberflächenprofilierung auf. Möglich sind hier verschiedene Formausgestaltungen in Abhängigkeit des Verwendungszwecks des jeweiligen Gerüstankerlochdübels 9. Für die meisten Zwecke dürfte jedoch eine Standardprofilierung ausreichen. Die Profilierung erfolgt derart, dass im Mittel die Sichtseite 13 parallel zur Unterseite 12 verläuft, damit sich die Sichtseite optimal an eine ebene Gehäusewand einfügt.

Auf dem Schaft 10 ist ein Expansionsabschnitt 14 vorgesehen. Der Expansionsabschnitt 14 wird von einem hülsenförmigen Schaumstoffmaterial von offenporiger Struktur gebildet. Der Expansionsabschnitt 14 weist eine zylindrische Außenkontur auf. Die erste Stirnseite 15 ist in einem Abstand zur Unterseite 12 des Dübelkopfes 11 von 5 mm angeordnet. Die Länge des Expansionsabschnitts 14 beträgt im vorliegenden Fall 30 mm. Der Durchmesser D_{E} des Expansionsabschnitts 14 beträgt im expandierten Zustand 20 mm (entspricht somit dem Bereich von 1,1 bis 1,7 x dem Durchmesser D_{A} des Gerüstankerlochs). Bei dem Schaumstoffmaterial handelt es sich um einen Polyurethan-Weichschaumstoff, der mit einem flammhemmend eingestellten Kunstharz imprägniert ist. Die Mantelfläche des Expansionsabschnitts 14 kann mit einer Acrylat-Seitenflächenbeschichtung versehen sein. Gleiches gilt auch für die erste Stirnseite 15 und die zweite Stirnseite 16. Der Expansionsabschnitt ist bevorzugt mit dem Schaft 10 verklebt. Eine axiale Sicherung erfolgt mittels einer am Schaft 10 an der ersten Stirnseite 15 angeordneten Scheibe 17. Die Scheibe weist im vorliegenden Fall einen Durchmesser von 12 mm auf.

Diese kann auf den Schaft 10 aufgepresst sein oder, insbesondere wenn der Schaft 10 wie im vorliegenden Fall aus Kunststoff hergestellt ist, einteilig mit dem Schaft 10 und dem Dübelkopf 11 hergestellt sein. Als Kunststoff kommt ein hochdichtes Polyethylen (HD-PE) in Frage. Dieser Kunststoff ist ein teilkristalliner, thermoplastischer Kunststoff mit hoher Dichte, der eine hohe Zähigkeit und Steifigkeit (auch bei niedrigen Temperaturen) aufweist. Darüber hinaus hat dieser eine sehr gute chemische Beständigkeit und gute Gleiteigenschaften. Zusätzlich verfügt er über eine geringe Feuchtigkeitsaufnahme, sehr gute Verarbeitungseigenschaften, lässt sich sehr gut verschweißen und ist physiologisch unbedenklich. Bei einer Dichte von 0,94 bis 0,95 g/cm³, weist er eine Formbeständigkeit bis zu + 70°C auf. Er unterliegt der Baustoffklasse B2 und ist normal entflammbar nach DIN 4102-1. PE-HD 300 eignet sich für diesen Einsatzzweck sehr gut.

Das PU-Material für den Expansionsabschnitt 14 weist im nicht aufgeschäumten Zustand eine Dichte bei 20°C von 1,0 bis 1,2 g/cm³ auf, ist nicht selbst entzündlich und nicht explosionsgefährlich und zudem unlöslich in Wasser. Es zählt zur Baustoffklasse B1 (schwer entflammbar) nach DIN 4102. Die Wärmeleitfähigkeit nach DIN 52612 beträgt λ₁₀ ≤ 0,048 W/m x k. Die Wasserdampfdiffusion, Sd-Wert beträgt < 0,5 m. Die Temperaturbeständigkeit ist im Bereich von -30°C bis +90 °C gegeben. Die Schalldämmung nach DIN 52210 beträgt 51 dB (Rechenwert R_{ST,W}).

Der Fugendurchlasskoeffizient, a-Wert nach DIN 18542 beträgt a < 1,0 m³/[h × m × (daPa)ⁿ]. Die Luftdichtigkeit nach DIN 18542 beträgt a < 1,0 m³/[h × m × (daPa)^{2/3}]. Darüber hinaus weist das Material eine gute Schlagregendichtigkeit und Verträglichkeit mit anderen Baustoffen auf.

Das Schaumstoffmaterial verfügt nicht zuletzt aufgrund seiner Imprägnierung über eine verzögerte elastische Rückstellbarkeit. Das bedeutet, dass nach dem Komprimieren des Expansionsabschnittes, z.B. durch Zusammendrücken von Hand, so dass der Expansionsabschnitt 14 eng an dem Schaft 10 anliegt, eine gewisse Zeit vergeht, bis der Expansionsabschnitt 14 sich wieder zu seiner vollständigen Größe rückexpandiert. Hierdurch verbleibt genügend Zeit, den Gerüstankerlochdübel 9 in ein entsprechendes Gerüstankerloch 6 im Wesentlichen lastfrei einzuführen.

Gemäß der Fig. 5 wird eine zweite Ausführungsform beschrieben. Es wird im Folgenden nur auf die wesentlichen Unterschiede eingegangen, so dass unter Verwendung gleicher Bezugsziffern hinsichtlich baugleicher und wirkungsgleicher Elemente auf die vorherige Beschreibung verwiesen wird. Der wesentliche Unterschied besteht lediglich darin, dass der Expansionsabschnitt 14 in einem vorkomprimierten Zustand angeliefert wird. Dieser Zustand wird durch eine Fixierhilfe 18 mit Hilfe einer außen aufgeschobenen Hülse festgelegt. Die Fixierhilfe 18 hat einen Außendurchmesser, der im Wesentlichen dem Außendurchmesser der Scheibe 17 entspricht, d.h. 12 mm. Hierdurch ist der Expansionsabschnitt 14 leicht in eine Gerüstankerloch 6 von 14 mm Durchmesser einzuführen. An Stelle einer Hülse kann auch eine Folie angeordnet sein, die abreißbar oder aufreißbar ausgestaltet sein kann. Nach dem Entfernen der Fixierhilfe 18 benötigt der Expansionsabschnitt 14 wieder einige Zeit, sich zu seiner vollen Größe, d.h. zu seinem vollständigen Durchmesser von 20 mm oder eben gegen die Wandung des Gerüstankerlochs 6 zu expandieren. Ein Teil dieser Zeit steht dann für den im Wesentlichen lastfreien Einführvorgang zur Verfügung.

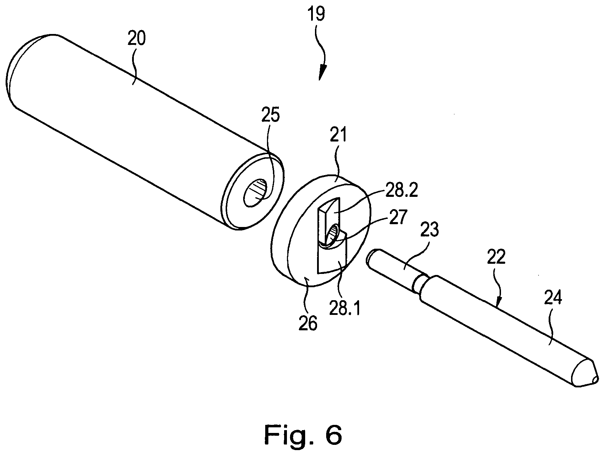

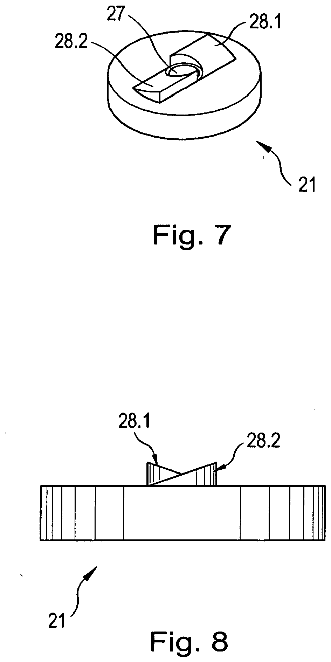

Anhand der Fig. 6 bis 8 wird nunmehr ein Fräswerkzeug 19 zur Herstellung des Senkloches 7 näher beschrieben. Das Fräswerkzeug 19 umfasst einen Handgriff 20 von im Wesentlichen zylindrischer Form, eine Frässcheibe 21 und einen Führungsschaft 22. Der Schaft 22 weist einen ersten zylindrischen Abschnitt 23 mit geringerem Durchmesser und einen zweiten zylindrischen Abschnitt 24 von größerem zylindrischem Durchmesser auf. Der zweite zylindrische Abschnitt 24 weist einen Durchmesser auf, der im Wesentlichen dem Durchmesser des Gerüstankerlochs 6 entspricht; jedoch mit ausreichendem Spiel in dieses einschiebbar ist. Der erste zylindrische Abschnitt 23 ist mittels einer Presspassung sowohl in die Frässcheibe 21 als auch in eine entsprechende Aufnahmebohrung 25 des Handgriffes 20 eingepresst. Anstelle eines zylindrischen Abschnittes 23 könnte auch ein Polygon zur Anwendung kommen, um eine formschlüssige Verdrehsicherung bereitzustellen. An der vorderen Stirnseite 26 der Frässcheibe 21 sind neben der Befestigungsbohrung 27 für den ersten zylindrischen Abschnitt 23 zwei diametral angeordnete Fräszähne 28.1 und 28.2 angeordnet. Die Fräszähne 28.1 und 28.2 weisen eine Höhe von 3,5 mm auf und sind nach hinten abfallend mit einer Freifläche versehen, die in einem Winkel von ca. 18° zur vorderen Stirnseite 26 ansteigt. Die Schneidfläche der Fräszähne steht senkrecht auf der vorderen Stirnseite 26. Die Außenflächen der Fräszähne 28 sind gebogen, so dass die Fräszähne 28.1 und 28.2 gemeinsam ein Senkloch 7 mit einem Durchmesser von etwa 30 mm erzeugen.

Unter Zuhilfenahme der Figuren wird nunmehr im Folgenden das erfindungsgemäße Verfahren zum Verschließen eines Gerüstankerloches 6 näher erläutert. Zur Anwendung soll ein Gerüstankerlochdübel 9 gemäß der Ausführungsform der Fig. 2 bis 4 zum Einsatz kommen. Nach Entfernen des Gerüstankers aus dem Gerüstankerloch 6 wird von dem Benutzer mittels des Fräswerkzeuges 19 ein im Wesentlichen zylindrisches Senkloch 7 mit Auflagestufe 8 in den Außenputz 4 gefräst. Hierzu wird der zweite zylindrische Abschnitt 24 in das Gerüstankerloch 6 eingeführt bis die Fräszähne 28.1 und 28.2 den Außenputz berühren. Anschließend wird mittels des Handgriffes 20 das Fräswerkzeug 19 im Uhrzeigersinn gedreht, wodurch sich die Fräszähne 28.1 und 28.2 in den Außenputz 4 hineinfräsen. Sobald die vordere Stirnseite 26 der Frässcheibe 21 mit dem Außenputz zur Anlage kommt, ist ein weiteres Eindringen nicht mehr möglich und der Fräsvorgang kann beendet werden. Hierdurch entsteht automatisch ein Senkloch mit einer Tiefe von ca. 3 bis 3,5 mm. Die Höhe der Fräszähne 28.1 und 28.2 ist etwas höher gewählt, weil der Außenputz 4 in aller Regel rau ist und sich diese kleine Maßzugabe im Einsatz bewährt hat. Nach der Entnahme des Fräswerkzeuges 19 nimmt der Benutzer einen Gerüstankerlochdübel 9 zur Hand und drückt den Expansionsabschnitt 14 zusammen. Dies geschieht in aller Regel dadurch, dass dieser von der Faust umschlossen wird. Im Anschluss verbleibt ausreichend Zeit, dass der Gerüstankerlochdübel 9 in diesem Zustand in das Gerüstankerloch 6 eingeführt wird, ohne dass der Expansionsabschnitt 14 bereits wieder zu stark zurückexpandiert ist, dass dieser Vorgang erschwert wird. Die Unterseite 12 des Dübelkopfes 11 dient hierbei als passgenauer Anschlag an der Auflagestufe 8 des Senkloches 7. Im Inneren des Gerüstankerlochs 6 expandiert nunmehr der Expansionsabschnitt 14 weiter, bis dieser mit entsprechender Kraft, da er sich nicht vollständig ausdehnen kann, an dem Gerüstankerloch 6 anliegt und hier eine Abdichtung bereitstellt. Insbesondere aufgrund der Tatsache, dass sich der Dübelkopf 11 im Wesentlichen passgenau in de Außenputz 4 einschmiegt, ergibt sich ein gutes Sichtresultat. Dieses wird in aller Regel noch dadurch verbessert, dass ein Übermalen der Sichtseite 13 und angrenzender Gehäusewandbereiche mit der zugehörigen Wandfarbe erfolgt. Hierdurch lassen sich noch vorhandene Spalte in aller Regel vollständig schließen.

Zusätzlich zu diesem Vorgehen besteht noch die Möglichkeit, dass zusätzlich noch eine Klebemasse verwendet wird. Überschüssige Klebemasse kann sich in den Bereich zwischen dem Expansionsabschnitt 14 und der Unterseite 12 des Dübelkopfes 11 ausdehnen oder diesen Bereich verschließen.

Das erfindungsgemäße Verfahren und der zugehörige Gerüstankerlochdübel 9 stellen eine schlagregensichere Abdichtung in der Dämmebene bereit. Der Gerüstankerlochdübel 9 ist nach dem putzbündigen Einbringen an der Oberfläche durch seine putzähnliche Oberflächenstruktur und nachfolgendem Anstrich im gewünschten Farbton kaum noch wahrzunehmen.

Durch den innen liegenden Expansionsabschnitt 14 wird das Gerüstankerloch 6 bis 14 mm im Durchmesser schlagregendicht abgedichtet und ein Hinterlaufen des Putzes mit Wasser ist ausgeschlossen.

Der Gerüstankerlochdübel 9 ist bei jedem Putzsystem einsetzbar.

Alternativ kann die Variante eines Gerüstankerlochdübels 9 gemäß Fig. 5 verwendet werden. Kurz vor dem Einsetzen wird hier die Fixierhilfe 18 entfernt. Anschließend erfolgt dann innerhalb einer gewissen Zeitvorgabe das Einführen in das Gerüstankerloch 6.

### Bezugszeichenliste

- 1: Gehäusewand
- 2: Mauerwerk
- 3: Wärmeisolierung
- 4: Außenputz
- 5: Gerüstankersockel
- 6: Gerüstankerloch
- 7: Senkloch
- 8: Auflagestufe
- 9: Gerüstankerlochdübel
- 10: Schaft
- 11: Dübelkopf
- 12: Unterseite
- 13: Sichtseite
- 14: Expansionsabschnitt
- 15: Erste Stirnseite
- 16: Zweite Stirnseite
- 17: Scheibe
- 18: Fixierhilfe
- 19: Fräswerkzeug
- 20: Handgriff
- 21: Frässcheibe
- 22: Führungsschaft
- 23: Erster zylindrischer Abschnitt
- 24: Zweiter zylindrischer Abschnitt
- 25: Aufnahmebohrung
- 26: Vordere Stirnansicht
- 27: Befestigungsbohrung
- 28.1: Fräszahn
- 28.2: Fräszahn
- D_{A}: Durchmesser Gerüstankerloch
- D_{E}: Durchmesser expandierter Expansionsabschnitt

## Patentansprüche

1. Verfahren zum Verschließen von Gerüstankerlöchern (6), mit folgenden Schritten:
Bereitstellen eines Gerüstankerlochdübels (9) mit einem Dübelkopf (11), einem im Wesentlichen zylindrischen, stiftförmigen Schaft (10) und einem am Schaft (10) angeordneten, dichtend wirkenden Expansionsabschnitt (14) aus einem komprimierbaren und elastisch rückstellbaren, hülsenförmigen Schaumstoffmaterial mit zylindrischer Außenkontur und mit einem expandierten Durchmesser (D_{E}), wobei der Dübelkopf (11) als scheibenförmiger Flachkopf ausgebildet ist, und
Einsetzen des Gerüstankerlochdübels (9) mit vorab komprimiertem Expansionsabschnitt (14) in das Gerüstankerloch (6), so dass der Expansionsabschnitt (14) im Wesentlichen im Gerüstankerloch (6) expandiert, **gekennzeichnet durch** folgende weiteren Schritte:
Fräsen eines Senklochs (7) im Wesentlichen koaxial zum Gerüstankerloch (6) in einen Außenputz (4); und
Einsetzen des Gerüstankerlochdübels (9) so dass der Dübelkopf (11) im Wesentlichen von dem Senkloch (7) aufgenommen ist,
wobei ein Durchmesser des Dübelkopfs (11) größer ist als der Durchmesser (D_{E}) des expandierten Expansionsabschnitts (14) und die Sichtseite (13) des Dübelkopfes (11) eine rauputzartige Oberflächenprofilierung aufweist.

2. Verfahren nach Anspruch 1, **dadurch gekennzeichnet, dass** die Sichtseite (13) des Dübelkopfes des Gerüstankerlochdübels (9) nach dem Einsetzen in das Gerüstankerloch (6) mit Farbe überstrichen wird.

3. Verfahren nach einem der Ansprüche 1 bis 2 zum Verschließen eines Gerüstankerloches (6), das durch eine mit einem Außenputz (4) versehenen Wärmeisolierung (3) hindurch bis in das anschließende Mauerwerk (2) verläuft, **dadurch gekennzeichnet, dass** die Länge des Gerüstankerlochdübels (9) kleiner ist als die Dicke der Wärmeisolierung (3) einschließlich des Außenputzes (4), und der Expansionsabschnitt (14) hauptsächlich in der Wärmeisolierung (3) angeordnet wird und der Gerüstankerlochdübel (9) keinen Kontakt zum Mauerwerk (2) aufweist.

4. Verfahren nach einem der Ansprüche 1 bis 3, **dadurch gekennzeichnet, dass** zwischen der Unterseite (12) des Dübelkopfes (11) und dem Expansionsabschnitt (14) ein Abstand vorhanden ist und vor dem Einsetzen des Gerüstankerlochdübels (9) eine Klebemasse aufgebracht wird, die nach dem Einsetzen des Gerüstankerlochdübels (9) in dem Hohlraum zwischen dem Dübelkopf (11), dem Gerüstankerloch (6) und dem Expansionsabschnitt (14) angeordnet ist.

5. Gerüstankerlochdübel (9) mit einem Dübelkopf (11), einem im Wesentlichen zylindrischen, stiftförmigen Schaft (10) und einem am Schaft (10) angeordneten Expansionsabschnitt (14) mit einem expandierten Durchmesser (D_{E}), wobei der Dübelkopf (11) als scheibenförmiger Flachkopf ausgebildet ist, und wobei, der Expansionsabschnitt (14) von einem komprimierbaren und elastisch rückstellbaren, hülsenförmigen Schaumstoffmaterial mit einer zylindrischen Außenkontur gebildet ist, **dadurch gekennzeichnet, dass** ein Durchmesser des Dübelkopfes (11) größer ist als der Durchmesser D_{E} des expandierten Expansionsabschnitts (14), und dass die Sichtseite (13) des Dübelkopfes (11) eine rauputzartige Oberflächenprofilierung aufweist.

6. Gerüstankerlochdübel (9) nach Anspruch 5, **dadurch gekennzeichnet, dass** das Schaumstoffmaterial ein Polyurethan-Weichschaumstoff ist.

7. Gerüstankerlochdübel (9) nach Anspruch 5 oder 6, **dadurch gekennzeichnet, dass** das Schaumstoffmaterial einer vorkomprimierten Stellung mittels einer Fixierhilfe (18) fixierbar ist.

8. Gerüstankerlochdübel (9) nach Anspruch 7, **dadurch gekennzeichnet, dass** die Fixierhilfe (18) eine das Schaumstoffmaterial umgebende Abreiß- bzw. Aufreißumhüllung ist.

9. Gerüstankerlochdübel (9) nach einem der Ansprüche 5 bis 8, **dadurch gekennzeichnet, dass** das Schaumstoffmaterial eine verzögerte elastische Rückstellfähigkeit aufweist, die bevorzugt mittels einer Imprägnierung erzielt ist.

10. Gerüstankerlochdübel (9) nach Anspruch 9, **dadurch gekennzeichnet, dass** das Imprägniermittel ein flammhemmend eingestelltes Kunstharz ist.

11. Gerüstankerlochdübel (9) nach einem der Ansprüche 5 bis 10, **dadurch gekennzeichnet, dass** der Expansionsabschnitt (14) einen expandierten Durchmesser D_{E} von mindestens 1,1 bis 1,7 x dem Durchmesser D_{A} des zugeordneten Gerüstankerlochs (6) aufweist.

12. Gerüstankerlochdübel (9) nach einem der Ansprüche 5 bis 11, **dadurch gekennzeichnet, dass** der Expansionsabschnitt (14) im Abstand, bevorzugt > 3 mm, zur Unterseite (12) des Dübelkopfes (11) angeordnet ist.

## Claims

1. Method of closing scaffolding anchor holes (6), comprising the following steps:
providing a scaffolding anchor hole plug (9) with a plug head (11), a substantially cylindrical, pin-shaped shaft (10) and a sealingly acting expansion section (14) arranged on the shaft (10) and made of a compressible and elastically recoverable, sleeve-shaped foam material with a cylindrical outer contour and with an expanded diameter (DE), the plug head (11) being designed as a disc-shaped flat head, and
inserting the scaffolding anchor hole plug (9) with precompressed expansion section (14) into the scaffolding anchor hole (6) so that the expansion section (14) expands substantially in the scaffolding anchor hole (6), **characterized by** the following further steps:
milling a countersunk hole (7) substantially coaxial with the scaffolding anchor hole (6) in an external rendering (4); and
inserting the scaffolding anchor hole plug (9) such that the plug head (11) is substantially received by the countersunk hole (7),
wherein a diameter of the plug head (11) is larger than the diameter (DE) of the expanded expansion section (14) and the visible side (13) of the plug head (11) has a roughcast-like surface profiling.

2. Method according to claim 1, **characterized in that** the visible side (13) of the plug head of the scaffolding anchor hole plug (9) is painted over with paint after insertion into the scaffolding anchor hole (6).

3. Method according to one of claims 1 to 2 for closing a scaffolding anchor hole (6) which extends through a thermal insulation (3) provided with an external rendering (4) into the adjoining brickwork (2), **characterized in that** that the length of the scaffolding anchor hole plug (9) is smaller than the thickness of the thermal insulation (3) including the external rendering (4), and the expansion section (14) is arranged mainly in the thermal insulation (3) and the scaffolding anchor hole plug (9) has no contact with the brickwork (2).

4. Method according to any one of claims 1 to 3, **characterized in that** there is a space between the underside (12) of the plug head (11) and the expansion section (14), and an adhesive mass is applied before insertion of the plug head (9) and is arranged in the cavity between the scaffolding anchor hole plug (11), the scaffolding anchor hole (6) and the expansion section (14) after insertion of the scaffolding anchor hole plug (9).

5. A scaffolding anchor hole plug (9) having a plug head (11), a substantially cylindrical, pin-shaped shaft (10) and an expansion section (14) with an expanded diameter (D_{E}) arranged on the shaft (10), wherein the plug head (11) is designed as a disc-shaped flat head, and wherein, the expansion section (14) is made of a compressible and elastically recoverable, sleeve-shaped foam material having a cylindrical outer contour, **characterized in that** a diameter of the plug head (11) is larger than the diameter DE of the expanded expansion section (14), and **in that** the visible side (13) of the plug head (11) has a roughcast-like surface profiling.

6. The scaffolding anchor hole plug (9) according to claim 5, **characterized in that** the foam material is a flexible polyurethane foam.

7. The scaffolding anchor hole plug (9) according to claim 5 or 6, **characterized in that** the foam material can be fixed in a precompressed position by means of a fixing aid (18).

8. The scaffolding anchor hole plug (9) according to claim 7, **characterized in that** the fixing aid (18) is a tear-off or tear-open sheath surrounding the foam material.

9. The scaffolding anchor hole plug (9) according to any one of claims 5 to 8, **characterized in that** the foam material has a delayed elastic recovery capability, preferably achieved by means of impregnation.

10. The scaffolding anchor hole plug (9) according to claim 9, **characterized in that** the impregnating agent is a flame-retardant synthetic resin.

11. The scaffolding anchor hole plug (9) according to any one of claims 5 to 10, **characterized in that** the expansion section (14) has an expanded diameter D_{E} of at least 1.1 to 1.7 x the diameter D_{A} of the associated scaffolding anchor hole (6).

12. The scaffolding anchor hole plug (9) according to one of claims 5 to 11, **characterized in that** the expansion section (14) is arranged at a distance, preferably > 3 mm, from the underside (12) of the plug head (11).

## Revendications

1. Procédé de fermeture de trous d'ancrage d'échafaudage (6), comprenant les étapes ci-dessous consistant à :
fournir une cheville de trou d'ancrage d'échafaudage (9) comprenant une tête de cheville (11), un fût (10) essentiellement cylindrique en forme de tige et une section d'expansion (14) agencée au niveau du fût (10), créant une étanchéité et constituée d'un matériau alvéolaire en forme de manchon, compressible et
retrouvant sa forme de manière élastique, présentant un contour extérieur cylindrique et un diamètre élargi (D_{E}), dans lequel la tête de cheville (11) est réalisée sous forme de tête plate discoïdale, et
insérer la cheville de trou d'ancrage d'échafaudage (9), avec sa section d'expansion (14) préalablement comprimée, dans le trou d'ancrage d'échafaudage (6), de sorte que la section d'expansion (14) s'élargit essentiellement dans le trou d'ancrage d'échafaudage (6), **caractérisé par** les étapes supplémentaires ci-dessous consistant à :
dans un enduit extérieur (4), fraiser un trou borgne (7) essentiellement coaxial par rapport au trou d'ancrage d'échafaudage (6) ; et
insérer la cheville de trou d'ancrage d'échafaudage (9) de sorte que la tête de cheville (11) est essentiellement accueillie par le trou borgne (7),
dans lequel le diamètre de la tête de cheville (11) est supérieur au diamètre (D_{E}) de la section d'expansion (14) élargie et le côté visible (13) de la tête de cheville (11) présente une texturation de surface de type enduit.

2. Procédé selon la revendication 1, **caractérisé en ce que** le côté visible (13) de la tête de cheville de la cheville de trou d'ancrage d'échafaudage (9) est peint avec de la peinture après l'insertion dans le trou d'ancrage d'échafaudage (6).

3. Procédé selon la revendication 1 ou 2 de fermeture d'un trou d'ancrage d'échafaudage (6) s'étendant, à travers une isolation thermique (3) munie d'un enduit extérieur (4), jusque dans la maçonnerie (2) contiguë, **caractérisé en ce que** la longueur de la cheville de trou d'ancrage d'échafaudage (9) est inférieure à l'épaisseur de l'isolation thermique (3), enduit extérieur (4) compris, et la section d'expansion (14) est agencée principalement dans l'isolation thermique (3) et la cheville de trou d'ancrage d'échafaudage (9) n'est pas en contact avec la maçonnerie (2).

4. Procédé selon l'une quelconque des revendications 1 à 3, **caractérisé en ce qu'**un espacement est présent entre la face inférieure (12) de la tête de cheville (11) et la section d'expansion (14) et **en ce que**, avant l'insertion de la cheville de trou d'ancrage d'échafaudage (9), une masse de colle est appliquée qui, après l'insertion de la cheville de trou d'ancrage d'échafaudage (9), est agencée dans la cavité située entre la tête de cheville (11), le trou d'ancrage d'échafaudage (6) et la section d'expansion (14).

5. Cheville de trou d'ancrage d'échafaudage (9) comprenant une tête de cheville (11), un fût (10) essentiellement cylindrique en forme de tige et une section d'expansion (14) agencée au niveau de la tige (10) et présentant un diamètre élargi (D_{E}), dans lequel la tête de cheville (11) est réalisée sous forme de tête plate discoïdale et dans lequel la section d'expansion (14) est formée par un matériau alvéolaire en forme de manchon, compressible et retrouvant sa forme de manière élastique, présentant un contour extérieur cylindrique, **caractérisée en ce qu'**un diamètre de la tête de cheville (11) est supérieur au diamètre D_{E} de la section d'expansion (14) élargie et **en ce que** le côté visible (13) de la tête de cheville (11) présente une texturation de surface de type enduit.

6. Cheville de trou d'ancrage d'échafaudage (9) selon la revendication 5, **caractérisée en ce que** le matériau alvéolaire est un matériau en mousse de polyuréthane souple.

7. Cheville de trou d'ancrage d'échafaudage (9) selon la revendication 5 ou 6, **caractérisée en ce que** le matériau alvéolaire peut être fixé dans une position précomprimée au moyen d'un auxiliaire de fixation.

8. Cheville de trou d'ancrage d'échafaudage (9) selon la revendication 7, **caractérisée en ce que** l'auxiliaire de fixation (18) est une enveloppe détachable ou déchirable entourant le matériau alvéolaire.

9. Cheville de trou d'ancrage d'échafaudage (9) selon l'une quelconque des revendications 5 à 8, **caractérisée en ce que** le matériau alvéolaire présente une capacité de rappel élastique retardé obtenue de manière préférée par imprégnation.

10. Cheville de trou d'ancrage d'échafaudage (9) selon la revendication 1, **caractérisée en ce que** l'agent d'imprégnation est une résine synthétique ignifuge.

11. Cheville de trou d'ancrage d'échafaudage (9) selon l'une quelconque des revendications 5 à 10, **caractérisée en ce que** la section d'expansion (14) présente un diamètre élargi (D_{E}) compris entre au moins 1,1 et 1,7 fois le diamètre D_{A} du trou d'ancrage d'échafaudage (6) associé.

12. Cheville de trou d'ancrage d'échafaudage (9) selon l'une quelconque des revendications 5 à 11, **caractérisée en ce que** la section d'expansion (14) est agencée à une distance, de manière préférée > 3 mm, de la face inférieure (12) de la tête de cheville (11).
